# FASCICULE DE BREVET EUROPEEN

(11) **EP 0 832 564 B1**
(45) Date de publication et mention de la délivrance du brevet: **04.12.2002**
(21) Numéro de dépôt: 96202538.3
(22) Date de dépôt: 11.09.1996
(51) Int. Cl.: A23C 9/152, A23L 1/304

(54) **Lait, boisson à base de lait ou produit diététique enrichi en calcium et procédé de préparation**
Mit Kalzium angereichte Milch, Milchgetränk oder Diätprodukt und Verfahren zu deren Herstellung
Calcium enriched milk, milk beverage or dietary product and process for preparing

(43) Date de publication de la demande: 01.04.1998
(73) Titulaire: SOCIETE DES PRODUITS NESTLE S.A., 1800 Vevey (CH)
(72) Inventeur: Jolivet, Elise, 3114 Oberwichterach (CH); Niesseron, Luc, 3604 Thun (CH); Schwan, Michael, 3507 Biglen (CH)
(74) Mandataire: Archambault, Jean

(56) Documents cités:
- EP-A- 0 195 167
- EP-A- 0 285 795
- DE-A- 3 719 977
- DE-B- 1 086 530
- GB-A- 2 161 361
- ALIMENTARIA, no. 271, Avril 1996, pages 79-82, XP000618114 B. LOPEZ: "Enriquecimiento en calcio de leche desnatada sometida a tratamiento uht"
- FOOD HYDROCOLLOIDS, vol. 4, no. 5, 1991, pages 415-422, XP000617575 F. RAYSID: "Stabilisation of soy milk fortified with ca gluconate"

## Description

L'invention a trait à l'enrichissement en calcium d'un lait, d'une boisson à base de lait ou d'un produit diététique.

Le calcium est un élément important de la nutrition des mammifères, en particulier des humains. Le calcium est nécessaire à la formation et au maintien de la qualité des os et est indispensable au métabolisme.

Les produits laitiers, en particulier le lait sont une source importante de calcium. Malheureusement, beaucoup de gens ne consomment pas la quantité de lait qui serait nécessaire aux besoins nutritionnels. Un litre de lait contient généralement environ 1250 mg de calcium.

L'enrichissement en calcium du lait ou des produits diététiques de composition voisine du lait se heurte à des problèmes technologiques dès lors que l'on désire fabriquer des produits liquides non acides, en particulier de longue conservation, par exemple ultrapasteurisés ou stérilisés. En effet, nombre de sels de calcium potentiellement utilisables sont solubles dans l'eau, si bien que la solution consistant à ajouter directement ces sels dans la matière première, puis à faire subir au mélange un traitement thermique, notamment d'ultrapasteurisation ou de stérilisation, n'est en général pas possible, car ce traitement thermique conduit à un produit final dégradé du point de vue de la stabilité physico-chimique et des propriétés organoleptiques. L'ajout de sels insolubles avant le traitement thermique ne présente pas les inconvénients précités, par contre ils sédimentent rapidement au fond de l'emballage.

Une solution à ce problème est apportée, par exemple, par le procédé selon EP-A-0285795. Elle consiste à ajouter des agents épaississants ou gélifiants à une suspension de sel de calcium, à traiter thermiquement le mélange, puis à le doser aseptiquement dans la ligne de production d'un produit laitier préalablement stérilisé.

L'addition de sels de calcium et de polyphosphate à un lait entier avant un traitement UHT est connue, par exemple, de AU-A-88768/82. Dans cette demande de brevet, l'addition de sel de calcium en présence de polyphospate a pour but de stabiliser le lait en évitant sa gélification avec le temps lors de l'entreposage.

Alimentaria No. 271, avril 1996, p. 79-82, Lopez B., "Enriquecimiento en calcio de ceche desnadata sometida a tratamiento UHT", décrit un procédé d'enrichissement d'un lait traité par UHT mentionnant l'utilisation du Ca lactate, Ca gluconate avec du Na₃-citrate et l'ajustement du pH. Le procédé comprend l'addition de 0,1-0,2 % de Na₃-citrate et de 0,2 % de K carrageenan au lait, un prétraitement thermique à 90° C/2 min., l'ajustement du pH à 6,75-7,3, l'introduction de Ca lactate, un préchauffage à 65° C, une homogénéisation en 2 étages à 160 bar + 60 bar, un traitement thermique de stabilisation des protéines à 90° C/1 min., une stérilisation indirecte par UHT à 139° C/4 s, un refroidissement à 20° C et un remplissage aseptique.

DE-B-1086530, se rapporte à un lait enrichi en Ca et plus particulièrement à un lait pour nourrissons, malades et convalescents. Les ingrédients utilisés sont le Ca glycérophosphate ou le Ca gluconate, le glucose et l'acide ascorbique. Le sel de Ca est dissout en présence de glucose et d'acide ascorbique, en l'absence d'air et sous forte agitation (col. 1,1. 32-38). La quantité de Ca ajoutée est si faible, le produit final ne contient que 4 % de Ca supplémentaire, qu'aucun agent chélateur ni procédé spécial ne sont nécessaires pour stabiliser le dit produit. L'enrichissement étant très faible, aucun problème technique ne se pose.

DE-A-3719977, concerne une préparation laitière diététique, en particulier pour nourrisson contenant 800 mg Ca/1. Le Ca lactate et le Ca glycérophosphate sont cités en exemple pour ajuster le rapport Ca/P à environ 1,8. Le Ca glycérophosphate représente au maximum 17 % de Ca ajouté. La méthode de stabilisation du Ca n'est pas clairement indiquée. Col. 1, 1.27-32, il est mentionné qu'aucune coagulation des protéines laitières n'est observée si les matières premières contenant les dites protéines sont préalablement dissoutes dans l'eau.

L'invention a pour but de mettre à disposition un lait ou un produit diététique enrichi en calcium, traité thermiquement, neutre et homogène et dépourvu d'agent épaississant ou gélifiant, qui ne présente pas les inconvénients précités. L'invention concerne donc un lait animal, une boisson à base de lait animal ou un produit diététique enrichi en calcium, sous forme liquide et traité thermiquement, pasteurisé, ultrapasteurisé ou stérilisé par traitement UHT et conditionné hygiéniquement ou aseptiquement, qui contient une quantité de calcium sous forme soluble au moins 20 % supérieure à celle contenue naturellement dans le lait, dont la source de calcium est le glycérophosphate et auquel on ajoute un chélateur du calcium, qui est dépourvu d'additif épaississant ou gélifiant, dont le pH est entre 6,6 et 7,2 et qui reste homogène sans séparation de phases notoire ni d'altération de goût à l'entreposage pendant sa durée de conservation.

On entend par lait dans le contexte de l'invention, un lait animal, bovin, ovin, caprin ou de chamelle.

Par produit diététique, on entend un produit à but nutritionnel de nature et de composition voisine de celle d'un lait, destiné à l'alimentation des enfants, adolescents ou adultes.

Un tel lait ou produit diététique est de préférence pauvre en matière grasse, notamment un lait demi-écrémé ou écrémé contenant 0 à 3,6 % en poids de matière grasse.

La source de calcium est constituée d'un sel de calcium dont la solubilité à pH neutre et proche assure l'absence de cristallisation dans le lait ou le produit diététique après le traitement thermique, ainsi que l'absence de réactivité dans les conditions du traitement thermique. Dans la mesure où il n'est pas assez soluble, il précipite en formant un dépôt. Si par contre sa solubilité est trop élevée, il y a un risque de réaction du calcium libre avec les protéines conduisant à une coagulation lors du traitement thermique.

Le sel de calcium remplissant les conditions précitées est le glycérophosphate, de calcium.

L'enrichissement en calcium correspond à au moins 20 %, et de préférence à environ 50 % par rapport à la quantité contenue naturellement dans le lait.

L'invention concerne également un procédé d'enrichissement en calcium d'un lait animal, d'une boisson à base de lait animal ou d'un produit diététique, dans lequel on ajuste le cas échéant le pH d'une base laitière liquide à une valeur comprise entre 6,6 et 7,2, l'on ajoute au produit liquide la glycérophosphate de calcium en présence d'un chélateur du calcium, puis l'on fait subir au mélange un traitement UHT et on le conditionne hygiéniquement ou aseptiquement.

Une base laitière peut être un lait ou une boisson à base de lait, ou un produit diététique de composition voisine d'un lait. Une telle base peut être un lait crû, un lait thermisé, bactofugé ou pasteurisé. Elle peut avoir été reconstituée par recombinaison à partir de poudre de lait écrémé, de matière grasse lactique anhydre et d'eau.

Le sel de calcium est le glycérophosphate.

Suivant le degré d'enrichissement recherché, la solubilité du sel de calcium et les conditions du traitement UHT, le sel ou le mélange en question représentera de préférence 0,3 à 0,9 % en poids du produit laitier final. Par exemple, si l'on pasteurise le produit, la quantité ajoutée peut être plus grande que dans le cas d'un traitement plus sévère d'ultrapasteurisation ou de stérilisation.

Un chélateur du calcium de choix est constitué par un citrate de sel alcalin, de préférence le citrate trisodique.

Le glycérophosphate de calcium constitue une source avantageuse d'enrichissement, en particulier d'un lait écrémé, dans la mesure où il présente l'avantage supplémentaire inattendu de blanchir le produit, ce qui supprime l'inconvénient connu de la coloration verdâtre des laits pauvres en matière grasse ayant subi un traitement UHT.

On utilise de préférence 0,3 à 0,5 % en poids de glycérophosphate et 0 à 0,15 % en poids de chélateur.

Selon une variante de réalisation du procédé, adaptée en particulier au cas d'un enrichissement à un taux élevé avec des sels de calcium qui risqueraient de réagir avec les protéines du lait dans les conditions d'un traitement thermique UHT relativement sévère, l'on prépare une suspension ou solution aqueuse de glycérophosphate de calcium, l'on ajuste le cas échéant son pH à une valeur comprise entre 6,6 et 7,2, l'on traite thermiquement la suspension ou la solution, puis on la dose aseptiquement en ligne dans la base laitière préalablement stérilisée ou ultrapasteurisée.

Les exemples ci-après illustrent l'invention. Dans ceux-ci, les parties et pourcentages sont en poids, sauf indication contraire.

### Exemple 1

On soumet 397 kg de lait crû écrémé à une pasteurisation à 85° C pendant 10 s, puis on le refroidit à 40° C. Dans 20 kg de cette matière première, on mélange 1,88 kg de glycérophosphate de calcium, dont la solubilité dans l'eau froide est de 2 % et 0,58 kg de citrate trisodique, puis on ajoute le mélange au reste de la matière première. On préchauffe le liquide à 78° C, puis on l'ultrapasteurise par UHT avec injection directe de vapeur à 138° C pendant 2 s. Après refroidissement à 78° C par détente flash, on homogénéise le liquide en deux étages à 150 bar, puis à 50 bar, on le refroidit à 4° C, puis on le conditionne en emballages briques, toutes les opérations suivant l'ultrapasteurisation ayant lieu aseptiquement.

La teneur en calcium est 2000 mg/l, ce qui équivaut à un enrichissement d'environ 65 % par rapport au lait

Après 45 j d'entreposage en circuit réfrigéré, on n'observe pas de séparation de phases ni d'altération du goût De plus, le lait a une nette couleur blanche, inattendue pour un lait maigre, qui correspond environ à celle d'un lait à 2% de matière grasse.

### Exemple 2

On procède comme à l'exemple 1,aux différences près que l'on utilise 1,52 kg de glycérophosphate et 0,4 kg de citrate trisodique et que le traitement UHT a lieu à 148° C pendant 5 s.

Les qualités du produit obtenu sont les mêmes qu' à l'exemple 1. La teneur en calcium est de 1850 mg/l, ce qui correspond à un enrichissement d'environ 50 % par rapport au lait.

## Revendications

1. Lait animal, boisson à base de lait animal ou produit diététique enrichi en calcium, sous forme liquide et traité thermiquement, qui est pasteurisé, ultrapasteurisé ou stérilisé par traitement UHT et conditionné hygiéniquement ou aseptiquement, qui contient une quantité de calcium sous forme soluble au moins 20 % supérieure à celle contenue naturellement dans le lait, dont la source de calcium est le glycérophosphate et auquel on ajoute un chélateur du calcium, qui est dépourvu d'additif épaississant ou gélifiant, dont le pH est entre 6,6 et 7,2 et qui reste homogène sans séparation de phases notoire ni d'altération de goût à l'entreposage pendant sa durée de conservation.

2. Lait, boisson ou produit diététique selon la revendication 1, dans lequel le chélateur du calcium est le citrate trisodique ou tripotassique.

3. Procédé d'enrichissement en calcium d'un lait animal, d'une boisson à base de lait animal ou d'un produit diététique selon la revendication 1, dans lequel on ajuste le cas échéant le pH à une valeur comprise entre 6,6 et 7,2, l'on ajoute au produit liquide le glycérophosphate de calcium à titre de source de calcium en présence d'un chélateur du calcium, puis l'on fait subir au mélange un traitement UHT et on le conditionne hygiéniquement ou aseptiquement.

4. Procédé selon la revendication 3, dans lequel le chélateur du calcium est le citrate trisodique ou tripotassique.

5. Procédé de préparation d'un lait, d'une boisson ou d'un produit diététique selon la revendication 1, dans lequel on prépare une solution aqueuse de glycérophosphate de calcium contenant un chélateur du calcium, l'on ajuste le cas échéant son pH à une valeur comprise entre 6,6 et 7,2, l'on traite thermiquement la solution, puis on la dose aseptiquement en ligne dans la base laitière préalablement stérilisée ou ultrapasteurisée.

## Patentansprüche

1. Tiermilch, Getränk auf Tiermilchbasis oder diätetisches Produkt, die mit Calcium angereichert sind, flüssig und thermisch behandelt sind, pasteurisiert, ultrapasteurisiert oder durch eine UHT-Behandlung sterilisiert und hygienisch oder aseptisch verpackt sind, Calcium in löslicher Form in einer Menge, die wenigstens 20% höher ist als die in Milch natürlich enthaltene Menge, enthalten, wobei die Calciumquelle ein Glycerophosphat ist und ein Chelatbildner für Calcium zugesetzt ist, die frei von einem verdickenden oder gelierenden Zusatz sind, einen pH-Wert zwischen 6,6 und 7,2 aufweisen und während der Lagerzeit homogen und ohne erkennbare Phasentrennung oder Geschmacksveränderung bleiben.

2. Milch, Getränk oder diätetisches Produkt nach Anspruch 1, wobei der Chelatbildner für Calcium Trinatriumcitrat oder Trikaliumcitrat ist.

3. Verfahren zur Anreicherung einer Tiermilch, eines Getränks auf Tiermilchbasis oder eines diätetischen Produkts nach Anspruch 1 mit Calcium, bei dem man ggf. den pH-Wert auf einen Wert zwischen 6,6 und 7,2 einstellt, dem flüssigen Produkt Calciumglycerophosphat als Calciumquelle in Gegenwart eines Chelatbildners für Calcium zusetzt, dann die Mischung einer UHT-Behandlung unterzieht und sie hygienisch oder aseptisch verpackt.

4. Verfahren nach Anspruch 3, bei dem der Chelatbildner für Calcium Trinatriumcitrat oder Trikaliumcitrat ist.

5. Verfahren zur Herstellung einer Milch, eines Getränks oder eines diätetischen Produkts nach Anspruch 1, bei dem man eine wässrige Lösung von Calciumglycerophosphat herstellt, die einen Chelatbildner für Calcium enthält, ggf. ihren pH-Wert auf einen Wert zwischen 6,6 und 7,2 einstellt, die Lösung thermisch behandelt und sie dann kontinuierlich der zuvor sterilisierten oder ultrapasteurisierten Milchbasis aseptisch zudosiert.

## Claims

1. Animal milk, a beverage based on animal milk or a dietetic product enriched in calcium, in liquid form and heat treated, which is pasteurised, ultrapasteurised or sterilised by UHT treatment and hygienically or aseptically packaged, which contains a quantity of calcium in a soluble form at least 20 % greater than that contained naturally in milk, of which the source of calcium is glycerophosphate and to which a calcium chelating agent is added, which is free from a thickening or gelling additive, of which the pH is between 6.6 and 7.2 and which remains homogeneous without the well-known phase separation and without any adverse changes to the taste on storage during its shelf life.

2. Milk, beverage or dietetic product according to claim 1, wherein the calcium chelating agent is trisodium citrate or tripotassium citrate.

3. Process for enriching in calcium an animal milk, a beverage based on animal milk or a dietetic product according to claim 1 wherein the pH is adjusted as required to a value of between 6.6 and 7.2, calcium glycerophosphate is added to the liquid product as a source of calcium in the presence of a calcium chelating agent and the mixture is then subjected to a UHT treatment and packaged hygienically or aseptically.

4. Process according to claim 3 wherein the calcium chelating agent is trisodium citrate or tripotassium citrate.

5. Process for preparing a milk, beverage or dietetic product according to claim 1, wherein an aqueous solution is prepared of calcium glycerophosphate containing a calcium chelating agent, its pH is adjusted as required to a value of between 6.6 and 7.2, and the solution is heat treated, and is then metered aseptically in-line into the previously sterilized or ultrapasteurized milk base.
